# EUROPÄISCHE PATENTSCHRIFT

(11) **EP 1 681 217 B1**
(45) Veröffentlichungstag und Bekanntmachung des Hinweises auf die Patenterteilung: **26.10.2011**
(21) Anmeldenummer: 05112507.8
(22) Anmeldetag: 20.12.2005
(51) Int. Cl.: B60S 1/58, B60S 1/04, B60S 1/34

(54) **Montagehilfe**
Mounting aid
Dispositif d'aide au montage

(30) Priorität: 18.01.2005 DE 102005002244; 10.10.2005 DE 102005048342
(43) Veröffentlichungstag der Anmeldung: 19.07.2006
(73) Patentinhaber: ROBERT BOSCH GMBH, 70442 Stuttgart (DE)
(72) Erfinder: Ritt, Jean-Marc, 67000 Strasbourg (FR)

(56) Entgegenhaltungen:
- WO-A-03/072406
- DE-A1- 10 331 568
- DE-A1- 10 332 966

## Beschreibung

Die Erfindung betrifft eine Montagehilfe zur Montage einer Scheibenwischvorrichtung an ein Kraftfahrzeug mit einer öffenbaren Heckscheibe gemäß dem Oberbegriff des Anspruches 1.

Bei Scheibenwischvorrichtungen von Kraftfahrzeugen mit öffenbarer Heckscheibe muss während der Montage der Scheibenwischvorrichtung darauf geachtet werden, dass eine an einem Wischermotor angeordnete Antriebswelle zu einer an einem Wischerarm vorgesehenen Drehwelle koaxial ausgerichtet ist. Ferner ist es bei der Montage der Scheibenwischvorrichtung wichtig, die Antriebswelle auf die Parkposition eines Wischerarms auszurichten und die Drehwelle richtig zu positionieren. Dies erfordert bisher vom Montagepersonal ein gewisses Geschick, Erfahrung und Zeit.

Im Hinblick auf die Vereinfachung der Montage ist bei einer aus der DE 103 31 568 A1 bekannten Scheibenwischvorrichtung eine Montagehilfe vorgesehen, die zur Ausrichtung der Antriebswelle auf die Parkposition des Wischerarms und zur richtigen Positionierung der Drehwelle als den Wischerarm tragender Wischerwelle dient und die der Antriebswelle zugeordnet eine Mitnehmerscheibe vorsieht. Die Mitnehmerscheibe ist als Lochscheibe mit einer Positionieröffnung für einen von der Drehwelle getragenen, stift- oder bolzenartigen Mitnehmer ausgebildet. Der Mitnehmer ist zur Drehwelle radial versetzt, drehfest und in Richtung auf die Mitnehmerscheibe federnd vorgespannt axial verschieblich angeordnet. Bei sich überdeckender Drehlage von Positionieröffnung und Mitnehmer rastet dieser in die Positionieröffnung ein und stellt damit die für den Betrieb der Scheibenwischvorrichtung notwendige Kupplungsverbindung zwischen Antriebswelle und Drehwelle bei lagerichtiger Zuordnung her. Die Abstützung des bolzenartigen Mitnehmers zur Drehwelle erfolgt über einen Kragarm, über den der bolzenartige Mitnehmer axial verschieblich geführt ist, bei Federbelastung in Richtung auf die Mitnehmerscheibe über eine längs des Kragarmes sich erstreckende Blattfederanordnung.

Eine Montagehilfe ähnlichen Aufbaus ist aus der WO0 03/072406 A1 bekannt. Bei dieser Lösung ist der über den Kragarm mit der Drehwelle verbundene Mitnehmerbolzen zum Kragarm lagefest. Der Kragarm seinerseits ist drehfest und axial verschieblich auf der Drehwelle angeordnet und in Einrastrichtung des Mitnehmerbolzens gegen die Mitnehmerscheibe über eine zur Drehwelle konzentrische Schraubenfeder beaufschlagt, so dass auch in diesem Fall bei durch Verdrehung der Antriebswelle gegenüber der Drehwelle sich ergebender Überdeckungslage von Mitnehmerbolzen und Positionieröffnung durch Einrasten des Mitnehmerbolzens in die Positionieröffnung eine lagerichtige und drehfeste Antriebsverbindung zwischen Antriebswelle und Drehwelle selbsttätig hergestellt wird.

Die Erfindung hat die Aufgabe, eine kostensparende Montagehilfe zu schaffen, mit der die Montage der Scheibenwischvorrichtung rasch und fehlerfrei durchgeführt werden kann.

Erreicht wird dies mit den Merkmalen des Anspruches 1, die bezogen auf die von der Mitnehmerscheibe zu trennende, an die Mitnehmerscheibe angelegte Montagehilfe eine Nutzung als die Mitnehmerscheibe abdeckender Transportschutz vorsehen. Dementsprechend kann mittels der Montagehilfe nicht nur mit weniger geübtem Personal gearbeitet werden, sondern die Montage, aufgrund der schon als Schutz während des Transportes nutzbaren Montagehilfe, auch besonders schnell durchgeführt werden. Durch Nutzung der Montagehilfe als Transport-schutz in vollständiger Abdeckung der Mitnehmerscheibe kann diese auch vor unerwünschten Kratzern geschützt werden, die später bei geöffneter Heckscheibe störend wirken könnten.

Die Montagehilfe kann eine Zentrierspitze, die in ein Sackloch in die Drehwelle einführbar ist, aufweisen. Dadurch können die Antriebswelle und die Drehwelle koaxial zueinander ausgerichtet werden, so dass sie gemeinsam in einer geraden Linie fluchten.

Ein Verbindungsstift, der auf einer durch die Antriebswelle verschwenkbaren Lagerplatte montiert ist, kann in eine an der Montagehilfe vorgesehenen, als Positionierelement dienenden Öffnung einsteckbar sein. Auf diese Weise kann mit der Montagehilfe der Verbindungsstift in eine Mitnehmerscheibe, auf der ebenfalls eine Öffnung vorgesehen ist, eingesteckt werden.

Wenn die als Positionierelement dienende Öffnung auf der Montagehilfe einen abgerundeten Randbereich aufweist, kann der Verbindungsstift leicht in die Öffnung eingeführt werden.

Zur korrekten Positionierung der Montagehilfe auf der Mitnehmerscheibe kann an der Montagehilfe eine Indexierungsnase vorgesehen sein, die in eine an die Indexierungsnase angepasste Aussparung auf der Mitnehmerscheibe einschiebbar ist.

Die angepasste Aussparung kann im eingebauten Zustand der Mitnehmerscheibe nicht sichtbar sein, da die Aussparung im eingebauten Zustand der Mitnehmerscheibe so platziert ist, dass die auch bei geöffneter Heckscheibe nicht von einer Person wahrgenommen werden kann.

Damit die Montagehilfe, wenn sie nach der beendeten Montage nicht mehr benötigt wird, von der Mitnehmerscheibe getrennt werden kann, kann sie mit einem öffenbaren Rasthaken versehen sein.

Die Montagehilfe kann wieder verwendbar sein, wodurch Kosten gespart werden können.

Nachfolgend wird ein Ausführungsbeispiel der erfindungsgemäßen Montagehilfe anhand der beiliegenden Zeichnungen näher erläutert.

Im Einzelnen zeigen:
- Fig. 1: eine Explosionsansicht einer mit einer erfindungsgemäßen Montagehilfe zusammenbaubaren Scheibenwischvorrichtung;
- Fig. 2: eine Schnittansicht durch einen Wischermotor und einen Wischarm;
- Fig. 3: eine perspektivische Draufsicht auf den Wi- schermotor ohne die daran angeordnete Montage- hilfe;
- Fig. 4: eine perspektivische Draufsicht auf den Wi- schermotor mit der daran angeordneten Montage- hilfe;
- Fig. 5: eine perspektivische Rückansicht auf den Wi- schermotor mit der daran angeordneten Montage- hilfe;
- Fig. 6: eine perspektivische Seitenansicht auf die Mitnehmerscheibe;
- Fig. 7: eine perspektivische Rückansicht auf die Mon- tagehilfe;
- Fig. 8: eine perspektivische Draufsicht auf die Monta- gehilfe;
- Fig. 9: eine perspektivische Draufsicht auf ein Wi- scherlager.

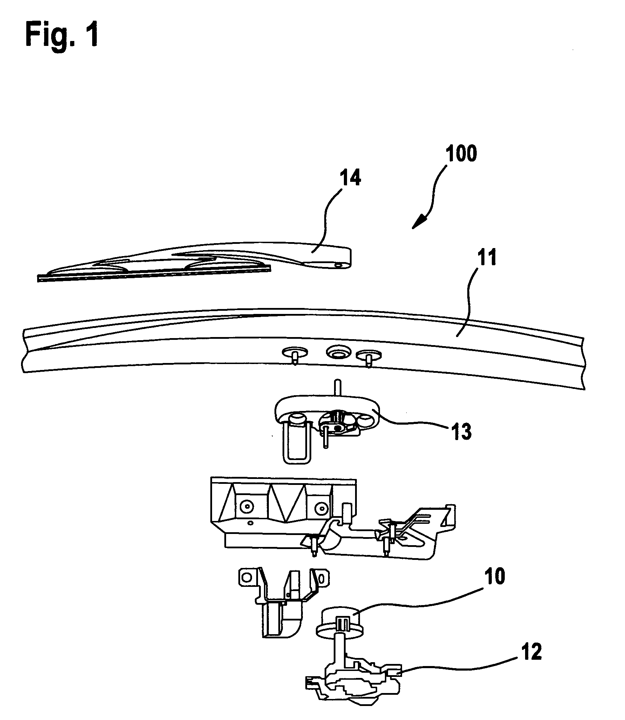

Fig. 1 zeigt eine Scheibenwischvorrichtung 100 für ein Kraftfahrzeug, die unter anderem mit einer Montagehilfe 10 an eine öffenbare Heckscheibe 11 montiert werden kann. Die Scheibenwischvorrichtung 100 weist unter anderem einen Wischermotor 12, ein Wischerlager 13 und einen Wischarm 14 auf.

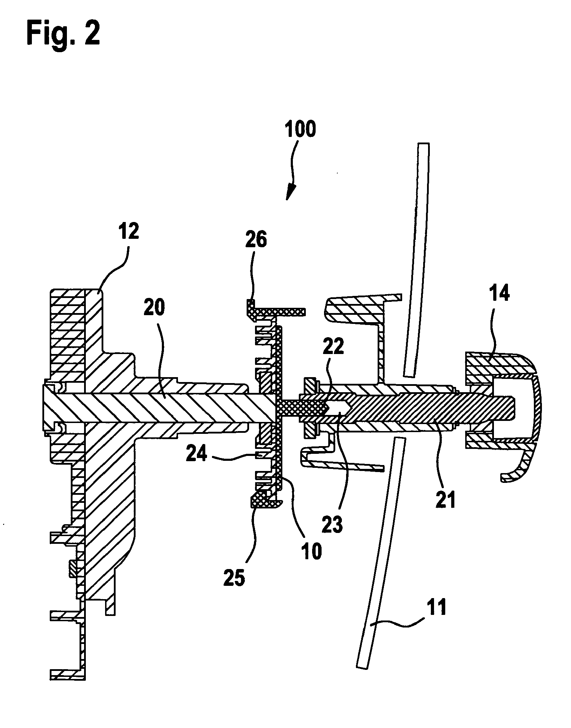

Bei der Montage der Scheibenwischvorrichtung 100 ist darauf zu achten, dass eine Antriebswelle 20 des Wischermotors 12 (siehe Fig. 2) koaxial zu einer Drehwelle 21 des Wischarms 14 ausgerichtet wird. Zu diesem Zweck weist die Montagehilfe 10 eine Zentrierspitze 22 auf, die in ein Sackloch 23, das in die Drehwelle 21 eingearbeitet ist, eingeschoben werden kann.

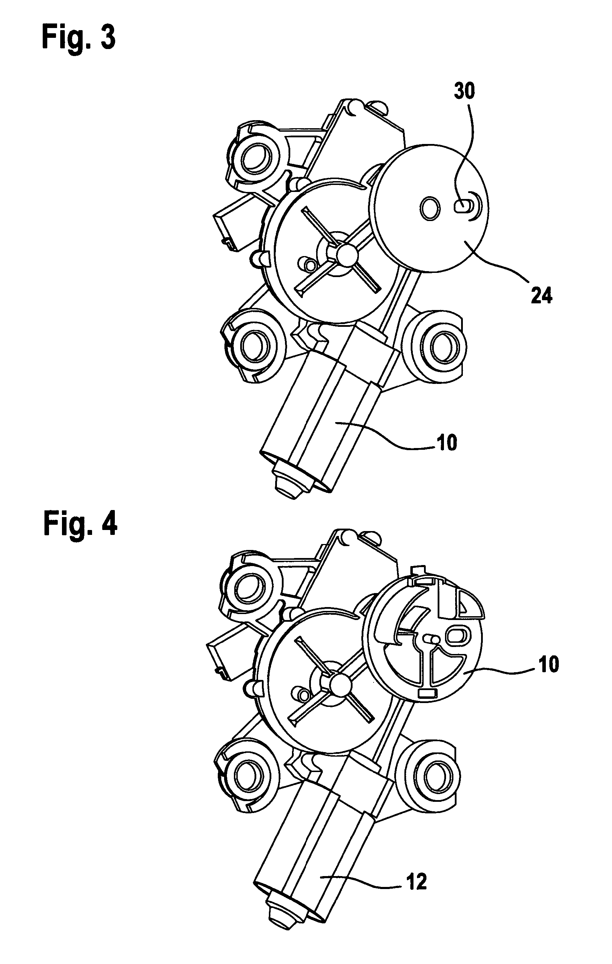

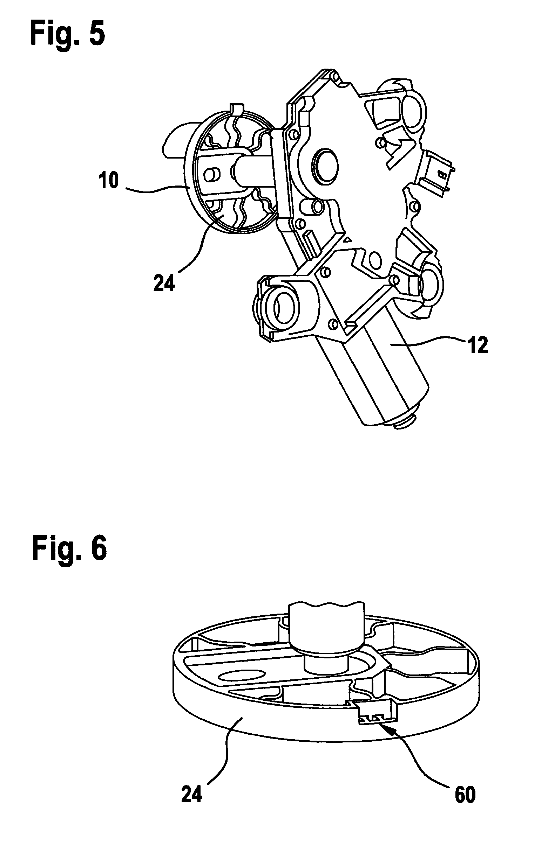

Die Montagehilfe 10 liegt auf einer Mitnehmerscheibe 24 auf und dient somit gleichzeitig auch als Transportschutz für die Mitnehmerscheibe 24 (siehe auch Fign. 4 und 5).

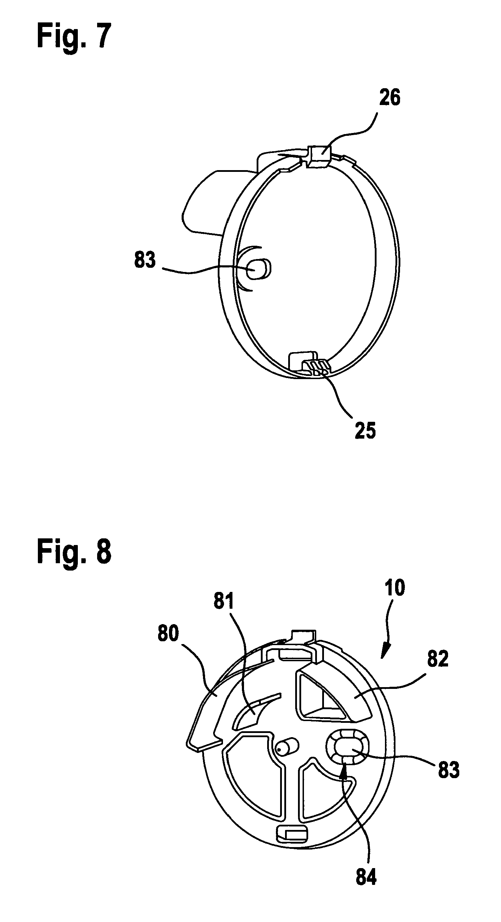

Die Montagehilfe 10 weist eine Indexierungsnase 25 auf (siehe Fign. 2 und 7), die in eine extra dafür vorgesehene an die Indexierungsnase 25 angepasste Aussparung 60 der Mitnehmerscheibe 24 eingreift (siehe Fign. 2 und 6). Die Aussparung 60 ist so an der Mitnehmerscheibe 24 platziert, dass sie im eingebauten Zustand der Mitnehmerscheibe 24 nicht sichtbar ist.

Nach dem die Montage beendet ist wird die Montagehilfe 10 nicht mehr benötigt. Zu diesem Zweck kann die Montagehilfe 10 mittels eines öffenbaren Rasthakens 26 (siehe Fign. 2 und 7) von der Mitnehmerscheibe 24 getrennt werden.

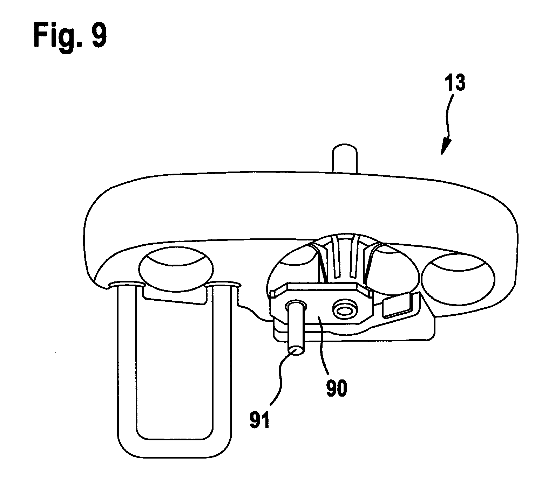

Die Montagehilfe 10 weist Positionierelemente 80, 81 und 82 auf, an die während der Montage eine Lagerplatte 90 des Wischerlagers 13 angelegt werden kann (siehe Fign. 8 und 9). Auf diese Weise kann die Antriebswelle 20 auf die Parkposition des Wischarms 14 ausgerichtet werden.

Ferner weist die Montagehilfe 10 ein als eine Öffnung ausgebildetes Positionierelement 83 auf, in das ein auf der Lagerplatte 90 angeordneter Verbindungsstift 91 eingesteckt werden kann. Auf diese Weise kann der Verbindungsstift 91 mit der Montagehilfe 10 in die Mitnehmerscheibe 24, auf der ebenfalls eine Öffnung 30 (siehe Fig. 3) vorgesehen ist, eingesteckt werden. Somit ist es für ein Montagepersonal leicht möglich auch den Wischarm 14 und die mit ihm verbundene Drehwelle 21 mit wenigen Handgriffen richtig zur Antriebswelle 20 zu positionieren.

Da das als Öffnung ausgebildete Positionierelement 83 einen abgerundeten Randbereich 84 aufweist, kann der Verbindungsstift 91 leicht darin eingesteckt werden.

## Patentansprüche

1. Montagehilfe (10) zur Montage einer Scheibenwischvorrichtung (100) an ein Kraftfahrzeug mit einer öffenbaren Heckscheibe (11), wobei die Scheibenwischvorrichtung (100) eine Antriebswelle (20), mit Mitnehmerscheibe (24), eine Drehwelle (21) und einen Wischarm (14) aufweist, und wobei die Montagehilfe (10) mit mindestens einem Positionierelement (80, 81, 82, 83) zur Ausrichtung der Antriebswelle (20) auf die Parkposition des Wischarms (14) und zur richtigen Positionierung der Drehwelle (21) versehen ist, **dadurch gekennzeichnet, dass** die von der Mitnehmerscheibe (24) zu trennende und zur Montage an die Mitnehmerscheibe (24) angelegte Montagehilfe (10) als die Mitnehmerscheibe (24) abdeckender Transportschutz einsetzbar ist.

2. Montagehilfe (10) nach Anspruch 1, **dadurch gekennzeichnet, dass** sie eine Zentrierspitze (92), die in ein Sackloch (23) in der Drehwelle (21) einführbar ist, aufweist.

3. Montagehilfe (10) nach Anspruch 1 oder 2, **dadurch gekennzeichnet, dass** ein Verbindungsstift (91), der auf einer durch die Antriebswelle (20) verschwenkbaren Lagerplatte (90) montiert ist, in einer an der Montagehilfe (10) vorgesehenen, als Positionierelement (83) dienenden Öffnung einsteckbar ist.

4. Montagehilfe (10) nach Anspruch 3, **dadurch gekennzeichnet, dass** die als Positionierelement (83) dienende Öffnung einen abgerundeten Randbereich (84) aufweist.

5. Montagehilfe (10) nach einem der Ansprüche 1 bis 4, **dadurch gekennzeichnet, dass** an ihr eine Indexierungsnase (25) vorgesehen ist, die in eine an die Indexierungsnase (25) angepasste Aussparung (60) auf der Mitnehmerscheibe (24) einschiebbar ist.

6. Montagehilfe (10) nach Anspruch 5, **dadurch gekennzeichnet, dass** die angepasste Aussparung (60) im eingebauten Zustand der Mitnehmerscheibe (24) nicht sichtbar ist.

7. Montagehilfe (10) nach einem der Ansprüche 1 bis 6, **dadurch gekennzeichnet, dass** an ihr ein öffenbarer Rasthaken (26) angeordnet ist.

8. Montagehilfe (10) nach einem der Ansprüche 1 bis 7, **dadurch gekennzeichnet, dass** sie wieder verwendbar ist.

## Claims

1. Mounting aid (10) for mounting a window wiper device (100) on a motor vehicle having an openable rear window (11), wherein the window wiper device (100) has a drive shaft (20) with a driving disc (24), an rotary shaft (21) and a wiper arm (14), and wherein the mounting aid (10) is provided with at least one positioning element (80, 81, 82, 83) for aligning the drive shaft (20) with the parking position of the wiper arm (14) and for the correct positioning of the rotary shaft (21), **characterized in that** the mounting aid (10), which is to be separate from the driving disc (24) and is placed onto the driving disc (24) for mounting purposes can be used as a transport protection means covering the driving disc (24).

2. Mounting aid (10) according to Claim 1, **characterized in that** it has a centering point (92) which can be introduced into a blind hole (23) in the rotary shaft (21).

3. Mounting aid (10) according to Claim 1 or 2, **characterized in that** a connecting pin (91) which is mounted on a bearing plate (90), which can be pivoted by the drive shaft (20), can be inserted in an opening, which is provided on the mounting aid (10) and serves as a positioning element (83).

4. Mounting aid (10) according to Claim 3, **characterized in that** the opening serving as a positioning element (83) has a rounded border region (84).

5. Mounting aid (10) according to one of Claims 1 to 4, **characterized in that** an indexing lug (25) is provided thereon, which indexing lug can be pushed into a cutout (60), which is matched to the indexing lug (25), on the driving disc (24).

6. Mounting aid (10) according to Claim 5, **characterized in that** the matching cutout (60) is not visible in the installed state of the driving disc (24).

7. Mounting aid (10) according to one of Claims 1 to 6, **characterized in that** an openable latching hook (26) is arranged thereon.

8. Mounting aid (10) according to one of Claims 1 to 7, **characterized in that** it is reusable.

## Revendications

1. Auxiliaire de montage (10) pour le montage d'un dispositif d'essuie-glace (100) sur un véhicule automobile comprenant une vitre arrière (11) pouvant être ouverte, le dispositif d'essuie-glace (100) présentant un arbre d'entraînement (20), avec un disque d'entraînement (24), un arbre rotatif (21) et un bras d'essuie-glace (14), et l'auxiliaire de montage (10) étant pourvu d'au moins un élément de positionnement (80, 81, 82, 83) pour orienter l'arbre d'entraînement (20) avec la position de repos du bras d'essuie-glace (14) et pour positionner correctement l'arbre rotatif (21), **caractérisé en ce que** l'auxiliaire de montage (10) devant être séparé du disque d'entraînement (24) et appliqué contre le disque d'entraînement (24) pour le montage peut être utilisé comme protection pour le transport, recouvrant le disque d'entraînement (24).

2. Auxiliaire de montage (10) selon la revendication 1, **caractérisé en ce qu'**il présente une pointe de centrage (92) qui peut être introduite dans un trou borgne (23) dans l'arbre rotatif (21).

3. Auxiliaire de montage (10) selon la revendication 1 ou 2, **caractérisé en ce qu'**une goupille de connexion (91), qui est montée sur une plaque de palier (90) pouvant être pivotée par l'arbre d'entraînement (20), peut être enfichée dans une ouverture prévue sur l'auxiliaire de montage (10) et servant d'élément de positionnement (83).

4. Auxiliaire de montage (10) selon la revendication 3, **caractérisé en ce que** l'ouverture servant d'élément de positionnement (83) présente une région de bord arrondie (84).

5. Auxiliaire de montage (10) selon l'une quelconque des revendications 1 à 4, **caractérisé en ce qu'**un nez d'indexage (25) est prévu sur celui-ci, lequel peut être enfoncé dans un évidement (60) sur le disque d'entraînement (24), adapté au nez d'indexage (25).

6. Auxiliaire de montage (10) selon la revendication 5, **caractérisé en ce que** l'évidement adapté (60) n'est pas visible dans l'état installé du disque d'entraînement (24).

7. Auxiliaire de montage (10) selon l'une quelconque des revendications 1 à 6, **caractérisé en ce qu'**un crochet d'encliquetage (26) pouvant être ouvert est disposé sur celui-ci.

8. Auxiliaire de montage (10) selon l'une quelconque des revendications 1 à 7, **caractérisé en ce qu'**il est réutilisable.
